Europäisches Patentamt

(19) European Patent Office    (11) Publication number:    **0 238 613**

Office européen des brevets            **B1**

(12)      # EUROPEAN PATENT SPECIFICATION

(45) Date of publication of the patent specification:    (51) Int. Cl. ⁵: **F 16 F   7/14**
21.03.90

(21) Application number: **86905953.5**

(22) Date of filing: **23.09.86**

(86) International application number:
**PCT/NO 86/00069**

(87) International publication number:
**WO 87/01775 (26.03.87 Gazette 87/07)**

(54) A SPRING ELEMENT, AND A METHOD OF MANUFACTURING SAID ELEMENT.

(30) Priority: **23.09.85 NO 853735**

(43) Date of publication of application:
**30.09.87 Bulletin 87/40**

(45) Publication of the grant of the patent:
**21.03.90 Bulletin 90/12**

(84) Designated Contracting States:
**AT BE CH DE FR GB IT LI LU NL SE**

(56) References cited:
**WO-A-83/03647**
**SE-B-425 517**
**US-A-3 596 865**
**US-A-4 190 227**

(73) Proprietor: **PEDERSEN, Regnor**
**Trollbakken 14**
**N-9000 Tromso (NO)**

(72) Inventor: **PEDERSEN, Regnor**
**Trollbakken 14**
**N-9000 Tromso (NO)**

(74) Representative: **Cline, Roger Ledlie**
**EDWARD EVANS & CO. Chancery House 53-64**
**Chancery Lane**
**London WC2A 1SD (GB)**

## Description

The invention relates to a spring element comprising at least two basic members and a series of shock absorbing arcuate elements extending between the basic members and integrally secured thereto by moulding.

A spring element of this type is known from US-A-4 190 227. According to this prior art the arcuate elements are placed in moulds into which a plastics material is injected to form the basic members. The need for special moulds increased costs and decreases the flexibility of the manufacturing process.

It is an object of the present invention to improve a spring element of the type defined above so as to provide the most simple and inexpensive structure possible at the same time as it permits highly varied designs. It is, furthermore, an object of the invention to be able to construct said spring element from the most simple standard material possible.

These objects are achieved in a spring element of the type mentioned above that is characterized as stated in the claims. The invention also relates to a method of manufacturing such a spring element, said method being characterized as stated in the method claims.

According to the invention the original material is a standard hollow profile that is available in long lengths and may be cut into lengths according to demand. A series of apertures may then be provided along one side of said hollow profile, said apertures having a diameter that is larger than that of the intended shock absorbing elements, which are preferably steel wire cables, but which may consist of other kinds of shock absorbing elements and which may be manufactured from a material different from steel. If square profiles are used it is very simple, e.g. to combine two such elements by welding in order to achieve a symmetrical spring characteristic. The shock absorbing arcuate elements can also be cut to length from large lengths, frayed ends not creating any problem, since the ends are to be secured by moulding inside said hollow profile. For completion said hollow profile is filled with a suitable moulding compound that may be introduced in a simple manner from the end portions.

In order to provide the spring element with a final spring characteristic as well as obtaining a soft surface it may be suitable to embed the entire shock absorbing structure in polyurethane foam that will also settle between said basic members and said arcuate spring elements. Alternatively, a flexible material may be introduced to provide for additional shock absorption between said basic members.

The invention is now to be disclosed in more detail with reference to an embodiment shown in the drawing, wherein

Figure 1    Is a side elevation showing a spring element according to the invention; and

Figure 2    is a section taken along line A - A in Figure 1.

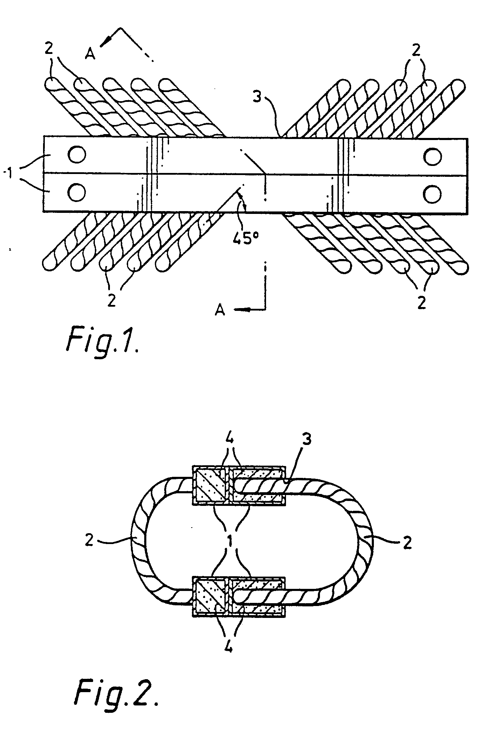

In the Figures two spring elements according to the invention are shown assembled to a unit providing for symmetrical shock absorption in several directions. The unit shown in Figure 1 is, thus, composed of a top element and a lower element according to the invention, which are connected at their common plane of contact. In disclosing the invention we will, thus, only refer to one half of the figure.

The spring element according to the invention is composed of two basic members 1 being, in the shown embodiment, made of a square profile which may be made from any suitable material, e.g. metal, like steel or aluminium, plastic,or the like. Said two basic members 1 are placed in parallel, and in their sides facing upwards holes 3 have been drilled for inserting shock absorbing, arcuate elements 2. Said arcuate elements 2 may be formed from cables cut to length, e.g. of steel fibre, glass fibre, carbon fibre, epoxy, urethane, or the like. Solid arcuate spring steel elements and leaf spring elements may be used as well.

The essential feature of the elements as disclosed is that the basic members are, thus, formed by profile means that may be manufactured in lengths that are cut as to demand, and that the same goes for said arcuate spring means 2.

The holes 3 in said basic members are made spacious in relation to the diameter of the cable means 2.

For manufacturing the spring elements according to the invention, e.g. two square tubes are secured in parallel in a jig with the holes facing upwards. Said arcuate cable means 2 are then inserted into said spacious holes 3 and adjusted in the desired angular position and arc opening, and are firmly held in that position. In the Figures an embodiment is shown, where said cable arcs are provided at an angle of 45° outwards from a center portion in order to result in a spring element design that shows maximum stability against force loads in the longitudinal direction of the profile.

When said arcuate cable means have been provided in the desired position, which is easily obtained because of the spacious holes in relation to the cable diameter, moulding material may be introduced into the void of the tube profile, e.g. through its open ends. The moulding material may be, e.g. urethane/polyurethane, epoxy, metal alloy, or a moulding material on the basis of cement. Said moulding material is designated 4 in the Figures.

When the moulding compound has set, the spring element according to the invention is, in principle, completed. According to an advantageous feature of the invention, e.g. two elements of this kind may be glued or welded together, as illustrated in the figure. Thus, an element with shock absorbing arcs on both sides is achieved, which will result in better shock ab-

3

sorption and a more stable spring characteristic. Such a design is very simple when square profiles are used.

It should be mentioned that the shape of the elements may be varied as to demand, and it is possible to use profiles for the basic members showing completely different designs than the square tubes. Also, more than two basic members may be combined. Thus, the invention forms a basis for many different embodiments and for solving many different problems of shock absorption.

According to an additional feature the spring characteristic may be further adjusted by moulding said elements into polyurethane foam or polyethylene foam. Such foam will settle between said basic members 1 as well as around the shock absorbing arcuate elements 2, and it will, thus, influence their shock absorbing properties with a certain adjusting effect, without however, influencing their main properties. Also, a soft surface of said shock absorbing elements is achieved, and they may, e.g. receive a block shape.

Between said basic members 1 it is also possible to provide a flexible material which can then act as an additional shock absorber.

It will be obvious from the above mentioned that a large number of modifications is possible within the scope of the invention.

## Claims

1. A spring element, comprising at least two basic members (1) and a series of shock absorbing arcuate elements (2) extending between the basic members and integrally secured thereto by moulding, characterized in that said basic members (1) are designed as hollow profile lengths formed with a series of apertures to receive the arcuate elements, the arcuate elements (2) having a diameter smaller than that of said apertures (3) to allow the elements to lie at a desired predetermined angle in said apertures (3), and that the profile void is filled with a moulding compound (4).

2. An element as defined in Claim 1, characterized in that said spring element is moulded into a foam, preferably a polyurethane foam or a polyethylene foam.

3. An element as defined in Claim 1, characterized in that a flexible material is provided between said basic members (1), e.g. by moulding.

4. An element as defined in Claim 1, characterized in that said basic members are formed of square profiles.

5. An element as defined in Claim 1, characterised in that said basic members (1) are positioned in parallel.

4

6. An element as defined in Claim 1, characterized in that at least two spring elements are combined by welding or glueing together basic members (1).

7. A method for the manufacture of a spring element as defined in one or several of the preceding claims, characterized in that at least two basic profile members (4) drilled at one side to provide a series of apertures are secured in parallel with said apertures facing upwards, that the ends of cable elements having a smaller diameter that said apertures are inserted in the apertures of the at least two member lengths, that the position of said cable elements in relation to said member lengths is adjusted in accordance with predetermined angles, that said members (5) are then filled with a moulding compound that is made to set, and that several elements of this kind are, if desired, are combined to an assembled unit.

8. A method as defined in Claim 7, characterized in that said elements are moulded into a foam, e.g. polyurethane foam or polyethylene foam.

9. A method as defined in Claim 7, characterized in that a flexible material is provided between said parallel member lengths and is secured by being welded or glued to said member lengths.

## Patentansprüche

1. Federelement, mit mindestens zwei Grundteilen (1) und einer Reihe von stoßabsorbierenden gekrümmten Elementen (2), die sich zwischen den Grundteilen erstrecken und an diesen durch Einformen integral befestigt sind, dadurch gekennzeichnet, daß die genannten Grundteile (1) als abgelängte Hohlprofile mit einer Anzahl von Öffnungen zur Aufnahme der gekrümmten Elemente ausgeführt sind, wobei die gekrümmten Elemente (2) einen Durchmesser haben, der kleiner ist als derjenige der genannten Öffnungen, damit die Elemente mit einem gewünschten vorgegebenen Winkel in den genannten Öffnungen liegen können, und daß der Hohlraum der Profile mit einer Formmasse (4) gefüllt ist.

2. Element nach Anspruch 1, dadurch gekennzeichnet, daß das genannte Federelement in einen Schaum eingebettet ist, vorzugsweise einen Polyurethanschaum oder einen Polyethylenschaum.

3. Element nach Anspruch 1, dadurch gekennzeichnet, daß zwischen den genannten Grundteilen (1) ein biegsamer Werkstoff vorgesehen ist, z. B. durch Einformen.

4. Element nach Anspruch 1, dadurch gekennzeichnet, daß die genannten Grundteile aus rechteckigen Profilen geformt sind.

5. Element nach Anspruch 1, dadurch gekenn-

## EP 0 238 613 B1

### 5

zeichnet, daß die genannten Grundteile (1) parallel liegen.

6. Element nach Anspruch 1, dadurch gekennzeichnet, daß mindestens zwei Federelemente durch Zusammenschweißen oder -kleben von Grundteilen (1) vereinigt sind.

7. Verfahren zur Herstellung eines Federelementes nach einem oder mehreren der vorstehenden Ansprüche, dadurch gekennzeichnet, daß mindestens zwei Grundprofilteile (4), die an einer Seite durch Bohren mit einer Reihe von Öffnungen versehen sind, parallel aneinander mit nach oben gerichteten Öffnungen befestigt werden, daß die Enden von Kabelelementen mit einem kleineren Durchmesser als die genannten Öffnungen in die Öffnungen der mindestens zwei Längen der Teile eingesetzt werden, daß die Lage der genannten Kabelelemente gegenüber den genannten Längen der Teile nach vorgegebenen Winkeln ausgerichtet wird, daß die genannten Teile (5) dann mit einer Formmasse gefüllt werden, die dann gehärtet wird, und daß mehrere Elemente dieser Art, wenn gewünscht, zu einer zusammengebauten Einheit verbunden werden.

8. Verfahren nach Anspruch 7, dadurch gekennzeichnet, daß die genannten Elemente in einen Schaum, z. B. Polyurethanschaum oder Polyethylenschaum, eingeformt werden.

9. Verfahren nach Anspruch 7, dadurch gekennzeichnet, daß zwischen den genannten Längen der parallelen Teile ein biegsamer Werkstoff vorgesehen wird und mit den Längen der Teile durch Schweißen oder Kleben verbunden wird.

### Revendications

1. Elément de ressort, comprenant au moins deux membres de base (1) et une série d'éléments arqués absorbant le choc (2), s'étendant entre les membres de base et intégralement fixés à ceux-ci par moulage, caractérisé en ce que les dits membres de base (1) sont conçus comme sections de profilés creux munis d'une série d'ouvertures pour recevoir les éléments arqués, les éléments arqués (2) ayant un diamètre plus petit que celui des ouvertures (3) pour permettre aux éléments de se loger avec un angle prédéterminé désiré dans les ouvertures (3), et que le vide du profilé est rempli d'une composition de moulage (4).

2. Elément selon la revendication 1, caractérisé en ce que le dit élément de ressort est moulé dans une mousse, de préférence une mousse de polyurethane ou une mousse de polyéthylène.

3. Elément selon la revendication 1, caractérisé en ce qu'un matériau flexible est prévu entre les dits membres de base (1), par exemple par moulage.

### 6

4. Elément selon la revendication 1, caractérisé en ce que les dits membres de base sont formés par des profilés rectangulaires.

5. Elément selon la revendication 1, caractérisé en ce que les dits membres de base (1) sont positionnés en parallèle.

6. Elément selon la revendication 1, caractérisé en ce qu'au moins deux éléments de ressort sont combinés en soudant ou collant ensemble des membres de base (1).

7. Procédé de fabrication d'un élément de ressort selon une ou plusieurs des revendications précédentes, caractérisé en ce qu'au moins deux membres profilés de base (4), percés sur un côté pour prévoir une série d'ouvertures, sont fixés parallèlement avec leurs ouvertures regardant vers le haut, que les bouts d'éléments de câble ayant un diamètre plus petit que les ouvertures, sont insérés dans les ouvertures de ces deux sections au moins des membres, que la position de ces éléments de câble par rapport aux sections des membres est ajustée selon les angles prédéterminés, que les dits membres (5) sont ensuite remplis d'une composition de moulage qui est fait durcir, et que plusieurs éléments de ce genre sont combinés, si désiré, pour former un assemblage.

8. Procédé selon la revendication 7, caractérisé en ce que les dits éléments sont moulés dans une mousse, par exemple une mousse de polyurethane ou une mousse de polyéthylène.

9. Procédé selon la revendication 7, caractérisé qu'un matériau flexible est prévu entre les sections de membres parallèles et y est fixé par soudage ou collage aux sections des membres.

Fig.1.

Fig.2.